# FASCICULE DE BREVET EUROPEEN

(11) **EP 0 919 039 B1**
(45) Date de publication et mention de la délivrance du brevet: **28.01.2004**
(21) Numéro de dépôt: 98930844.0
(22) Date de dépôt: 12.06.1998
(51) Int. Cl.: G06K 7/00

(54) **DISPOSITIF POUR COMMUNIQUER AVEC UN SUPPORT DE DONNEES PORTABLE**
VORRICHTUNG ZUR KOMMUNIKATION MIT EINEM TRAGBAREN DATENTRÄGER
METHOD FOR COMMUNICATING WITH A PORTABLE DATA MEDIUM

(30) Priorité: 13.06.1997 FR 9707320
(43) Date de publication de la demande: 02.06.1999
(73) Titulaire: CP8 Technologies, 78431 Louveciennes (FR)
(72) Inventeur: BUCHHOLTZ, Jacques, F-78470 Saint Rémy lès Chevreuse (FR)
(74) Mandataire: Corlu, Bernard
(86) Numéro de dépôt international: PCT/FR1998/001229
(87) Numéro de publication internationale: WO 1998/057289

(56) Documents cités:
- EP-A- 0 713 189
- DE-A- 4 415 022
- DE-A- 4 418 609

## Description

L'invention concerne un dispositif pour communiquer avec un support de données portable et comportant à cet effet au moins un contact électrique destiné à coopérer avec au moins un contact électrique du support de données portable par l'intermédiaire de moyens de connexion, dans lequel lesdits moyens de connexion comprennent une feuille s'étendant entre le contact électrique du dispositif et le contact électrique du support de données portable et présentant au moins une zone formant un premier élément de conduction traversant une épaisseur de la feuille et agencé pour coopérer avec chacun desdits contacts, et le dispositif comprend des moyens d'application de force agencés pour appliquer une force de rapprochement sur les contacts de façon à appliquer ledit premier élément de conduction contre chacun desdits contacts, et pour supprimer l'application de ladite force de façon à éloigner ledit premier élément de conduction des contacts.

Le support de données portable est notamment constitué par une carte du type carte de crédit équipée, de façon connue en soi, d'une puce à microprocesseur ou à circuits logiques de traitement de données, et portant plusieurs contacts électriques destinés à coopérer avec autant de contacts portés par le dispositif, comme décrit notamment dans le brevet américain 4.211.919. Quant au dispositif, il s'agit de tout appareil destiné à échanger des informations avec le support de données portable dans le cadre de toute procédure telle qu'une opération financière, un contrôle d'accès d'un usager à un lieu, etc.

Classiquement, les moyens de connexion consistent en un peigne fixé sur le dispositif et portant plusieurs pattes métalliques souples, juxtaposées. Ces pattes sont reliées aux contacts du dispositif et sont destinées à coopérer par élasticité avec les contacts du support de données portable. D'autres moyens de connexion à ressorts métalliques existent aussi. Ce genre de moyens de connexion présente l'inconvénient d'être coûteux à fabriquer, en raison des opérations de découpe de métal qu'il suppose.

L'invention a pour but de proposer un dispositif du genre cité au début de l'exposé, dont les moyens de connexion au support de données portable sont peu coûteux à fabriquer.

A cet effet, selon l'invention, ledit premier élément de conduction comprend un bloc en élastomère électriquement conducteur.

D'autres particularités et avantages de la présente invention apparaîtront plus clairement à la lecture de la description ci-après d'un exemple de réalisation du dispositif, illustré à l'aide des figures suivantes, dans lesquelles :
La figure 1 est une vue en plan de l'intérieur d'un lecteur de support de données portable en train de coopérer avec un support de données portable
La figure 2 est une vue en coupe selon la ligne II-II de la figure 1 ;
La figure 3 est une vue en plan d'un connecteur équipant le lecteur ;
La figure 4 est une vue partielle en coupe selon la ligne IV-IV de la figure 3 ;
La figure 5 est une vue partielle en coupe selon la ligne V-V de la figure 3 ;
Les figures 6a à 6c sont trois vues partielles en coupe selon la ligne VI-VI de la figure 3, lorsque le lecteur coopère avec le support de données portable pour illustrer trois phases successives d'une procédure de mise en contact de ces deux dispositifs ;
La figure 7 est une vue partielle en coupe du circuit imprimé 4, montrant une réalisation pratique de l'un quelconque de ses contacts, coopérant avec un élément de conduction ;
La figure 8a est une vue en coupe selon la ligne VIII-VIII de la figure 2, montrant un perfectionnement de l'invention consistant à ajouter une lèvre de fermeture de la fente du lecteur 1, tandis que la figure 8b diffère de la figure 8a en ce qu'elle représente le lecteur 1 une fois la carte introduite ;

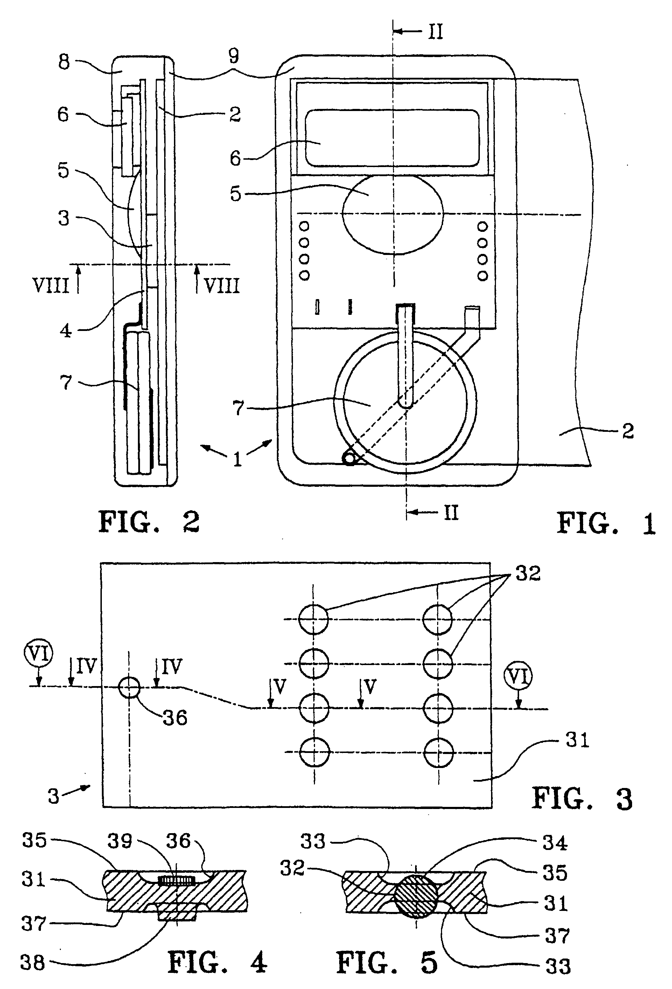

Sur les figures 1 et 2, on a représenté un lecteur de carte à puce 1 apte à recevoir une carte 2 du type carte de crédit équipée, de façon connue en soi, d'une puce à microprocesseur ou à circuits logiques de traitement de données, et portant plusieurs contacts électriques destinés à coopérer avec autant de contacts portés par le lecteur , par l'intermédiaire d'un connecteur 3.

Dans cet exemple, le lecteur 1 est portatif et de taille si faible qu'il reçoit seulement une extrémité de la carte portant ladite puce : il a notamment pour fonction de permettre à un porteur de cette carte de lire un solde de compte enregistré dans la carte. Il comprend un circuit imprimé 4 portant sur une face supérieure une puce à microprocesseur 5 et un afficheur 6 et, sur une face inférieure, ledit connecteur 3, fixé au circuit imprimé 4 par des moyens appropriés. Ces moyens peuvent notamment être constitués par :
- le collage au moyen de colle rapportée ou d'une couche adhésive double face ;
- des pattes portées par le connecteur 3, qui traversent le circuit imprimé 4 et sont rabattues sur lui ;
- le vissage.

Le lecteur 1 comprend encore un jeu de piles 7. Un boîtier habille le lecteur 1 et comprend un corps 8 recevant les différents éléments du lecteur 1 , et un couvercle 9 fermant le corps 8 et ménageant avec lui une fente latérale destinée à être traversée par la carte 2 de façon que les contacts de celle-ci viennent en regard du connecteur 3.

Le connecteur 3 des figures 3 à 5 comprend un corps 31 constitué d'une feuille épaisse rectangulaire en un matériau électriquement isolant et souple. Selon une forme préférée de réalisation, le corps 31 est en élastomère. Il comprend plusieurs orifices traversants circulaires 32, disposés de la même façon que les contacts de la carte 2 et en nombre égal à ceux-ci (ici, huit). Au droit de chaque orifice 32, et de chaque côté du connecteur 3 , se trouve une cuvette circulaire 33 réduisant l'épaisseur du corps 31 à cet endroit.

Dans chaque orifice 32, se trouve un élément de conduction formé par une sphère de conduction 34 constituée d'un matériau élastomère tel que le caoutchouc siliconé, incorporant une charge le rendant électriquement conducteur. Typiquement, cette charge est de l'argent ou du carbone. Chaque sphère de conduction 34 a un diamètre un peu supérieur à celui de l'orifice 32 de façon que celui-ci exerce une certaine pression périphérique sur la sphère de conduction 34. De la sorte, chaque sphère de conduction 34 est maintenue par élasticité dans l'orifice 32 correspondant. Chaque sphère de conduction 34 est montée sur le corps 31 de façon qu'elle soit en retrait par rapport à une face 35 du corps 31 destinée à coopérer avec le circuit imprimé 4 du lecteur 1 , et qu'en revanche elle dépasse d'une face opposée 37 du corps 31 destinée à coopérer avec la carte 2.

A distance des orifices 32, le corps 31 du connecteur 3 présente, sur sa face 35 destinée à coopérer avec le circuit imprimé 4 du lecteur 1, une cuvette 36 circulaire et, sur sa face 37 destinée à coopérer avec la carte et au droit de la cuvette 36, une saillie 38 sensiblement cylindrique et s'étendant perpendiculairement au corps vers l'extérieur de celui-ci. La saillie 38 est telle qu'elle dépasse de la surface du corps 31.

Dans la cuvette 36 du corps 31, se trouve une plaquette de conduction 39 circulaire en un matériau électriquement conducteur, rigide ou souple. Dans cet exemple, elle est constituée du même matériau que les sphères de conduction 34. L'agencement est tel que la plaquette de conduction 39 est située en retrait par rapport à la surface du corps 31. La plaquette de conduction 39 est fixée sur le corps 31 par tout moyen approprié, notamment par collage ou emboutissage.

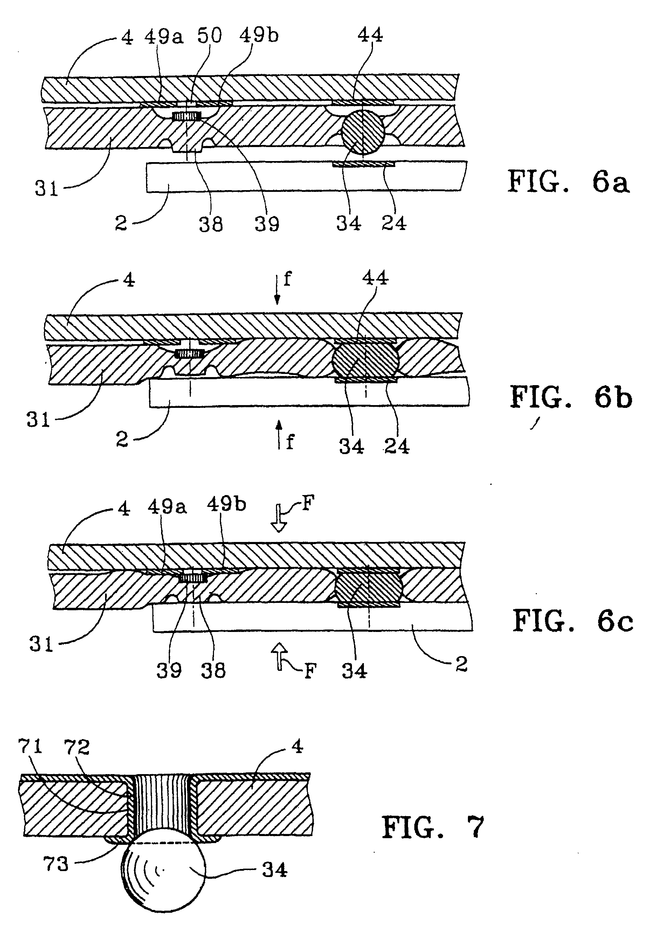

Le fonctionnement du connecteur 3 va maintenant être expliqué en regard des figures 6a à 6c. Sur la figure 6a, la carte 2 est représentée telle qu'insérée dans le lecteur 1. Le circuit imprimé 4 du lecteur 1 porte, au droit de chaque sphère de conduction 34 du connecteur 3 , un contact plat et de préférence circulaire 44 et, au droit de la seule plaquette de conduction 39 du connecteur 3 , une paire de contacts plats et de préférence circulaires 49a, 49b disposés l'un à côté de l'autre avec interposition d'un espace 50 non conducteur. L'espace 50 est disposé en face de la plaquette de conduction 39 et est de taille plus petite. Tous les contacts 24,44,49a,49b sont en un matériau métallique classique tel qu'utilisé dans les circuits imprimés : il s'agit typiquement d'un composé multicouche comprenant une couche de cuivre, recouverte d'une couche de nickel puis d'une couche d'or ou d'étain-plomb. Les deux contacts 49a,49b constituent deux parties fixes d'un interrupteur dont une partie mobile est constituée par la plaquette de conduction 39 : cet interrupteur sert à détecter la présence de la carte dans le lecteur 1. Dans la situation de la figure 6a, et compte tenu des retraits ou dépassements précités des éléments de conduction, aucune continuité électrique n'existe entre les contacts 24 et 44 d'une part, et entre les contacts 49a et 49b d'autre part, car les éléments de conduction ne touchent aucun contact électrique.

La figure 6b représente une phase intermédiaire de mise en contact dans laquelle la carte 2 et le circuit imprimé 4 du lecteur 1 ont été rapprochés l'un de l'autre. Ceci a été obtenu en mettant à profit une certaine déformabilité du boîtier du lecteur 1 : c'est l'utilisateur du lecteur 1 qui doit exercer manuellement un effort moyen f d'un côté et de l'autre du boîtier, c'est-à-dire sur son corps 8 et son couvercle 9 (voir figure 6b) pour provoquer un rapprochement entre ceux-ci. Cette déformabilité pourra être obtenue de plusieurs façons, dont notamment les suivantes :
- prévoir un boîtier dont le matériau constitutif est déformable (par exemple le plastique) ;
- prévoir un boîtier dont le couvercle 9 est monté de façon élastique sur le corps 8, c'est-à-dire par l'intermédiaire d'éléments de liaison déformables, par exemple des éléments en élastomère.

La conséquence de l'effort f exercé par l'utilisateur est qu'une continuité électrique est réalisée par les sphères de conduction 34 entre les contacts 24,44 , mais pas encore par la plaquette de conduction 39 car la saillie 38 n'est pas encore sollicitée par la carte 2. Ce résultat est obtenu en ajustant de façon appropriée les retraits et dépassements respectifs des sphères de conduction 34 et de la plaquette de conduction 39 , ainsi que la hauteur de la saillie 38. On notera que les sphères de conduction 34 ont subi un écrasement produisant une augmentation de leur diamètre.

En exerçant un effort F plus important, l'utilisateur atteint une phase finale de mise en contact (figure 6c) dans laquelle également la plaquette de conduction 39 réalise une continuité électrique entre les deux contacts 49a,49b. En effet, lors du rapprochement plus important de la carte 2 par rapport au lecteur 1, celle-ci a exercé un appui sur la saillie 38 , de sorte que la plaquette de conduction 39 a été poussée vers le circuit imprimé 4 du lecteur 1 jusqu'à toucher les contacts 49a,49b.

Le séquencement des deux phases précitées de mise en contact permet avantageusement de respecter les exigences de la norme ISO7816-3 qui définit la séquence de génération des signaux qu'il faut appliquer à la carte, puisque le lecteur 1 n'alimentera la carte qu'après avoir constaté que l'interrupteur 49a,49b est fermé.

Naturellement, le relâchement progressif de la force F provoquera une déconnexion des contacts dans l'ordre inverse de celui décrit pour la mise en contact, c'est-à-dire tout d'abord l'éloignement de la plaquette de conduction 39 , puis l'éloignement des sphère de conduction 34, toujours selon les exigences de la norme ISO7816-3.

On notera qu'il y a lieu d'ajuster précisément la force F nécessaire à l'obtention de la fermeture de l'interrupteur 49a,49b ainsi que la hauteur de la sailllie 38, de façon à ne pas dépasser une force maximale Fₘₐₓ que la puce de la carte peut supporter sans dommages. Typiquement, Fₘₐₓ est de l'ordre de 50 grammes. Cet ajustement sera obtenu en jouant sur les dimensions respectives des pièces et sur la dureté du matériau élastomère choisi.

Un perfectionnement de l'invention consiste en ce que certains au moins des éléments de conduction sont chargés de façon qu'ils présentent une résistance électrique déterminée, de façon à remplacer avantageusement des résistances réalisées ordinairement sous forme de composants discrets, et implantées sur le circuit imprimé 4 du lecteur 1. La valeur des résistances ainsi constituées devra être mesurée alors que l'effort F est appliqué, de façon à tenir compte de l'influence de cet effort sur la valeur de résistance.

Naturellement, les éléments de conduction pourront avoir toute forme appropriée, autre que celles décrites ci-dessus. Par exemple, les sphères de conduction 34 pourront être remplacées par des cylindres. De plus, les éléments de conduction pourront même être, non plus rapportés sur le corps 31 du connecteur 3, mais réalisés dans la masse du corps 31 en même temps que celui-ci.

La figure 7 illustre une réalisation pratique, et connue en soi, de l'un quelconque des contacts 44, 49a, 49b du circuit imprimé 4. Le circuit imprimé 4 présente un trou traversant cylinfrique 71 recouvert d'une couche conductrice 72 qui rejoint les deux faces du circuit imprimé 4. Sur sa face destinée à coopérer avec la carte 2, la couche conductrice 72 forme un anneau circulaire 73, constituant un contact avec lequel est destinée à coopérer la sphère de conduction 34 : avantageusement, l'anneau 73 constitue un moyen d'auto-centrage de la sphère de conduction 34.

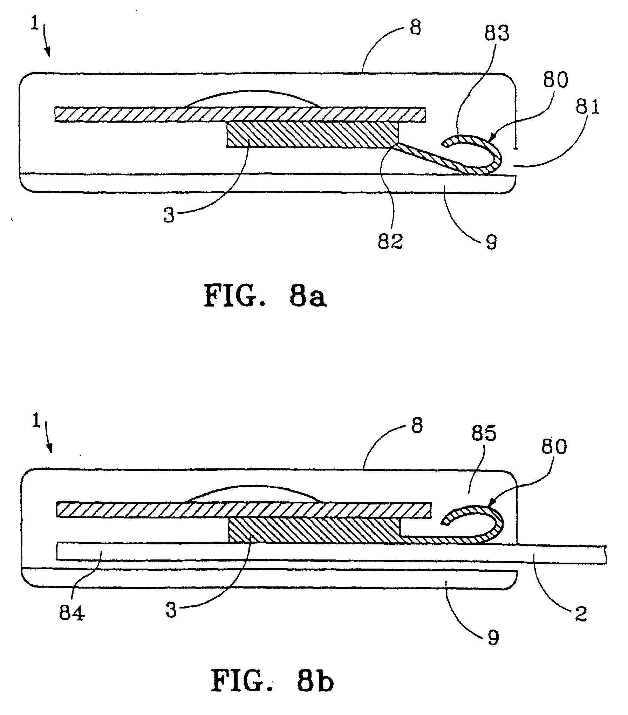

La figure 8a montre un perfectionnement de l'invention consistant à ajouter une lèvre 80 sur le lecteur 1 pour fermer la fente 81 par laquelle est insérée la carte 2, lorsque cette dernière est absente. Cet agencement a pour avantage d'empêcher des corps étrangers ou de la saleté de pénétrer dans le lecteur 1, ce qui pourrait nuire à son bon fonctionnement.

La lèvre 80 s'étend sur toute la largeur de la fente 81. Dans cet exemple, elle est constitutée d'une feuille en élastomère, formée d'une seule pièce avec le connecteur 3 en élastomère et repliée sur elle-même. Elle présente deux bords longitudinaux 82,83 dont l'un 82 est relié à un bord du connecteur 3 situé à côté de la fente 81, et dont l'autre 83 est libre.

La figure 8b diffère de la figure 8a en ce qu'elle représente le lecteur 1 une fois la carte introduite. On constate que la lèvre 80 a été repoussée latéralement par une extrémité avant 84 de la carte, alors que celle-ci traversait la fente 81, dans un espace 85 ménagé dans le corps 8 du boîtier pour recevoir cette lèvre 80. Après retrait de la carte, la lèvre 80 revient par élasticité à sa position de la figure 8a.

En variante, la lèvre 80 est distincte du connecteur 3 et rapportée sur lui.

Dans une variante qui n'inclut pas d'interrupteur 39,49a,49b, il est possible de concevoir le connecteur 3 en un matériau rigide, tandis que les éléments de conduction 34 destinés à coopérer avec la carte sont encore en élastomère. Dans ce cas, chaque élément de conduction tel que 34 destiné à coopérer en même temps avec le circuit imprimé 4 et la carte 2 devra dépasser de chaque face du connecteur 3 , de façon à garantir qu'il pourra effectivement entrer en contact avec eux.

## Revendications

1. Dispositif pour communiquer avec un support de données portable (2) et comportant à cet effet au moins un contact électrique (44) destiné à coopérer avec au moins un contact électrique (24) du support de données portable par l'intermédiaire de moyens de connexion (3) , dans lequel lesdits moyens de connexion (3) comprennent une feuille (31) s'étendant entre le contact électrique (44) du dispositif et le contact électrique (24) du support de données portable et présentant au moins une zone formant un premier élément de conduction (34) traversant une épaisseur de la feuille et agencé pour coopérer avec chacun desdits contacts (24,44), et le dispositif comprend des moyens d'application de force (8,9) agencés pour appliquer une force de rapprochement sur les contacts (24,44) de façon à appliquer ledit premier élément de conduction (34) contre chacun desdits contacts (24,44), et pour supprimer l'application de ladite force de façon à éloigner ledit premier élément de conduction (34) des contacts (24,44), **caractérisé en ce que** ledit premier élément de conduction (34) comprend un bloc en élastomère électriquement conducteur.

2. Dispositif selon la revendication 1, dans lequel ledit premier élément de conduction (34) est un insert logé dans un orifice (32) de la feuille (31).

3. Dispositif selon la revendication 2, dans lequel le premier élément de conduction (34) a une forme de sphère.

4. Dispositif selon la revendication 1, dans lequel l'élément de conduction (34) présente une résistance électrique de valeur déterminée.

5. Dispositif selon la revendication 1, dans lequel ladite feuille (31) est en élastomère.

6. Dispositif selon la revendication 1, dans lequel ladite feuille (31) comprend une zone formant un second élément de conduction (39) agencé pour coopérer avec deux contacts (49a,49b) du dispositif lorsque les moyens d'application de force (8,9) sont activés.

7. Dispositif selon la revendication 6, dans lequel le second élément de conduction (39) est en forme de plaquette située sur une première face de la feuille (31), une saillie (38) étant située sur une seconde face de la feuille (31) opposée à la première, à l'opposé du second élément de conduction (39) pour coopérer avec le support de données portable (2).

8. Dispositif selon la revendication 6, dans lequel les premier (34) et second (39) éléments de conduction sont agencés pour qu'une activation des moyens d'application de force (8,9) provoque une coopération de chaque premier élément de conduction (34) puis du second élément de conduction (39) avec les contacts, tandis qu'une désactivation des moyens d'application de force (8,9) supprime la coopération du second élément de conduction (39) puis de chaque premier élément de conduction (34) avec les contacts.

9. Dispositif selon la revendication 1, dans lequel le dispositif comprend un boîtier recevant le support de données portable (2), et lesdits moyens d'application de force comprennent des parois (8,9) dudit boîtier.

10. Dispositif selon la revendication 1, qui présente une fente (81) par laquelle le support de données portable (2) peut être introduit dans le dispositif pour coopérer avec lui, la dite feuille portant une lèvre (80) agencée pour boucher ladite fente en l'absence du support de données portable, et pour s'escamoter lors d'une introduction du support de données portable dans la fente.

## Claims

1. Device to communicate with a portable data medium (2) and therefore including at least one electrical contact (44) designed to cooperate with at least one electrical contact (24) of the portable data medium via connection means (3), in which said connection means (3) comprise a sheet (31) extending between the electrical contact (44) of the device and the electrical contact (24) of the portable data medium and with at least one area forming a first conduction element (34) crossing through a thickness of the sheet and designed to cooperate with each of said contacts (24, 44), and the device comprises means to apply force (8, 9) designed to apply pressure on the contacts (24, 44) in order to press said first conduction element (34) against each of said contacts (24, 44), and to remove the application of said force so as to separate said first conduction element (34) from the contacts (24, 44), **characterised in that** said first conduction element (34) comprises an electrically conducting elastomer block.

2. Device according to claim 1, in which said first conduction element (34) is an insert housed in a hole (32) of the sheet (31).

3. Device according to claim 2, in which the first conduction element (34) has the shape of a sphere.

4. Device according to claim 1, in which the conduction element (34) has an electrical resistance of specified value.

5. Device according to claim 1, in which said sheet (31) is made from elastomer.

6. Device according to claim 1, in which said sheet (31) comprises an area forming a second conduction element (39) designed to cooperate with two contacts (49a, 49b) of the device when the means to apply force (8, 9) are activated.

7. Device according to claim 6, in which the second conduction element (39) has the shape of a plate located on a first side of the sheet (31), a projection (38) being located on a second side of the sheet (31) opposite to the first, opposite the second conduction element (39) to cooperate with the portable data medium (2).

8. Device according to claim 6, in which the first (34) and second (39) conduction elements are designed so that activation of the means to apply force (8, 9) results in cooperation of each first conduction element (34) then of the second conduction element (39) with the contacts, whereas deactivation of the means to apply force (8, 9) removes the cooperation of the second conduction element (39) then of each first conduction element (34) with the contacts.

9. Device according to claim 1, in which the device comprises a box receiving the portable data medium (2), and said means of applying force comprising walls (8, 9) of said box.

10. Device according to claim 1, which has a slot (81) through which the portable data medium (2) can be inserted in the device to cooperate with it, said sheet having a lip (80) designed to block said slot in the absence of the portable data medium and to retract when the portable data medium is inserted in the slot.

## Patentansprüche

1. Vorrichtung zur Kommunikation mit einem tragbaren Datenträger (2), die dazu mindestens einen elektrischen Kontakt (44) zum Zusammenwirken über Verbindungsmittel (3) mit mindestens einem elektrischen Kontakt (24) des tragbaren Datenträgers umfasst und in der die besagten Verbindungsmittel (3) ein Blatt (31) umfassen, das sich zwischen dem elektrischen Kontakt (44) der Vorrichtung und dem elektrischen Kontakt (24) des tragbaren Datenträgers erstreckt und mindestens eine ein erstes leitfähiges Element (34) bildende Zone aufweist, das eine Schicht des Blatts durchquert und zum Zusammenwirken mit jedem der besagten Kontakte (24,44) angebracht ist, wobei die Vorrichtung Kraftanwendungsmittel (8,9) umfasst, die derart zur Ausübung einer Annäherungskraft auf den Kontakten (24,44) angeordnet sind, dass besagtes erstes leitfähige Element (34) gegen jeden der besagten Kontakte (24,44) drückt sowie derart zur Aufhebung der besagten Kraft angeordnet sind, dass sich besagtes erstes leitfähige Element (34) von den Kontakten (24,44) entfernt, **dadurch gekennzeichnet, dass** das besagte erste leitfähige Element (34) einen elektrisch leitfähigen Elastomerblock umfasst.

2. Vorrichtung nach Anspruch 1, bei der das besagte erste leitfähige Element (34) ein in der Öffnung (32) des Blatts (31) gelagerter Einsatz ist.

3. Vorrichtung nach Anspruch 2, bei der das besagte erste leitfähige Element (34) kugelförmig ist.

4. Vorrichtung nach Anspruch 1, bei der das leitfähige Element (34) einen elektrischen Widerstand von bestimmter Stärke aufweist.

5. Vorrichtung nach Anspruch 1, bei der das besagte Blatt (31) aus Elastomer ist.

6. Vorrichtung nach Anspruch 1, bei der das besagte Blatt (31) eine ein zweites leitfähiges Element (39) bildende Zone aufweist, das zum Zusammenwirken mit zwei Kontakten (49a,49b) der Vorrichtung angeordnet ist, wenn die Kraftanwendungsmittel (8,9) aktiviert sind.

7. Vorrichtung nach Anspruch 6, bei der das zweite leitfähige Element (39) plättchenförmig ist und sich auf einer ersten Seite des Blatts (31) befindet, wobei auf einer zweiten, der ersten gegenüberliegenden Seite des Blatts (31) gegenüber dem zweiten leitfähigen Element (39) ein Vorsprung (38) zum Zusammenwirken mit dem tragbaren Datenträger (2) vorhanden ist.

8. Vorrichtung nach Anspruch 6, bei der das erste (34) und zweite (39) leitfähige Element angeordnet sind, damit eine Aktivierung der Kraftanwendungsmittel (8,9) jeweils ein Zusammenwirken zwischen jedem ersten leitfähigen Element (34) und den Kontakten und anschließend zwischen dem zweiten leitfähigen Element (39) und den Kontakten hervorruft, während eine Deaktivierung der Kraftanwendungsmittel (8,9) das Zusammenwirken zwischen dem zweiten leitfähigen Element (39) und den Kontakten und anschließend zwischen jedem ersten leitfähigen Element (34) und den Kontakten aufhebt.

9. Vorrichtung nach Anspruch 1, wobei die Vorrichtung ein Gehäuse zur Aufnahme des tragbaren Datenträgers (2) umfasst und die besagten Kraftanwendungsmittel Wände (8,9) des besagten Gehäuses umfassen.

10. Vorrichtung nach Anspruch 1, die einen Schlitz (81) aufweist, durch den der tragbare Datenträger (2) in die Vorrichtung eingeführt werden kann, um mit dieser zusammenzuwirken, wobei das besagte Blatt eine Lippe (80) zum Verschließen des besagten Schlitzes aufweist, wenn der tragbare Datenträger nicht vorhanden ist und welche eingezogen wird, wenn der tragbare Datenträger in den Schlitz eingeführt wird.
